Europäisches Patentamt

(19) European Patent Office

Office européen des brevets

(11) Publication number: **0 049 716**
**B1**

(12) **EUROPEAN PATENT SPECIFICATION**

(45) Date of publication of patent specification: **12.12.84**

(21) Application number: **80200957.1**

(22) Date of filing: **09.10.80**

(51) Int. Cl.³: **B 64 D 11/00,** B 60 R 7/00, A 47 B 46/00

(54) **Stowage bin mechanism.**

(43) Date of publication of application:
**21.04.82 Bulletin 82/16**

(45) Publication of the grant of the patent:
**12.12.84 Bulletin 84/50**

(84) Designated Contracting States:
**DE FR GB NL SE**

(56) References cited:
CA-A- 999 910
DE-A-2 923 567
US-A-1 434 880
US-A-3 081 138
US-A-3 132 892
US-A-3 700 199
US-A-4 076 351

POPULAR MECHANICS, vol. 126, no. 3,
September 1966, Published by Hearst Corp.,
NEW YORK (US), "Swing-down cupboards",
pages 126 and 127

(73) Proprietor: **The Boeing Company**
**P.O. Box 3707**
**Seattle Washington 98124 (US)**

(72) Inventor: **Steidl, Robert H.**
**815-124th St. S. W. Sp. 128**
**Everett 98204 Washington (US)**

(74) Representative: **Hoijtink, Reinoud et al**
**OCTROOIBUREAU ARNOLD & SIEDSMA 1,**
**Sweelinckplein**
**NL-2517 GK Den Haag (NL)**

## Description

The invention relates to an overhead stowage bin assembly comprising a supporting structure, means for carrying a bin from said structure movable between a stowed upper position and an open position in which the bin is at least somewhat tilted downward with the opening thereof moved downwards.

Common carrier vehicles have long been provided with some sort of stowage for passengers' personal luggage adjacent the passenger seats. The stowage in earlier forms consisted of a simple rack along the sides of the vehicle, as a railway car, while in later years, especially in aircraft, such stowage has been elaborated to one sort or other of closable bins. Such are not only more sightly and convenient, but also restrain the contents from being ejected onto the heads of the passengers in the event of rough air. Such bins have been in some cases stationary with doors, while in other configurations have been pivoted so that they may tilt downward for easier access.

Such a bin is known from US—A—3.700.199. The carrying means in this case are formed by pivoting means so that the bin may tilt downward for easier access.

Racks or bins along the outer wall of an airplane may be relatively low (with respect to the floor) without seriously impeding access to the seats. However, the advent of multi-aisle seating arrangements, in which three or four seats may be between the aisles, close to the centerline of the airplane body, imposes a requirement that the stowage bins be somewhat higher from the floor in order to make access to the center seats easy. On the other hand, the bins must be capable of being easily lowered to easy reach of passengers and attendants.

The object of the invention is to provide an overhead stowage bin assembly as described above, that fulfils these requirements.

According to the invention this is achieved with an overhead stowage bin assembly as characterized in claim 1.

Preferred and further embodiments are characterized in the subclaims.

The invention will be described with reference to the accompanying drawings.

Figure 1 of the drawings is a diagrammatic transverse section of an airplane fuselage, showing a typical arrangement of seats and stowage bins.

Figure 2 is a transverse section showing a stowage bin and the supporting mechanism in its retracted or stowed position.

Figure 3 is a similar section showing the bin and associated mechanism in the extended or down position.

Figure 4 is a perspective of the mechanism.

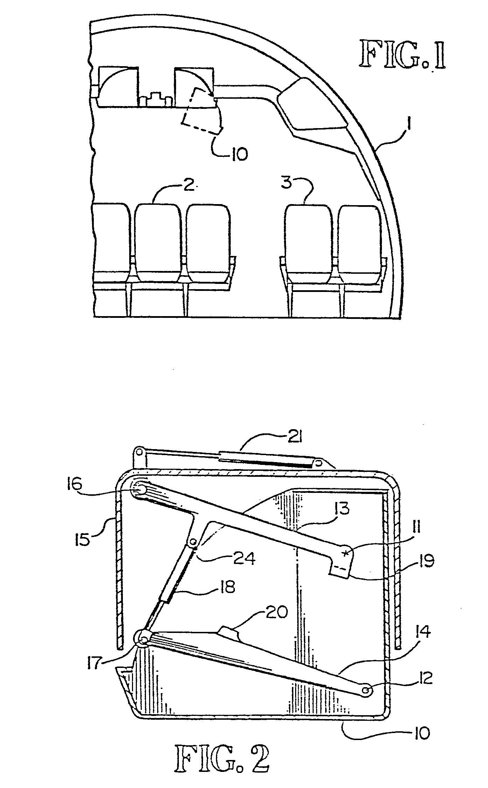

Modern large passenger airplanes (so-called "wide-body" craft) ordinarily have the seats arranged in three groups, separated by two longitudinal aisles. Customarily, also, various types of overhead stowage bins or racks are provided to accommodate coats and small luggage of the passengers. In the configuration shown in Figure 1, for example, each transverse row of seven seats consists of two seats 3 along each outer wall of the fuselage and three center seats 2, leaving two aisles. Above the center seats are sets of luggage bins 10 to serve the passenger occupying these center seats. It is apparent that such bins should, in their retracted or stowed position be sufficiently above the floor to provide adequate headroom for easy access to the seat. However, such bins in their extended or down position should be sufficiently low to permit easy access, while at the same time should not obstruct the aisles. Also, in common with all aircraft equipment, the mechanism supporting the bins should be strong, light, simple, and reliable. This invention is particularly directed to meeting the requirements of center stowage bins, although it is not limited in its application to this special problem.

Figure 2 illustrates such a center stowage bin and the mechanism devised for supporting and guiding it. The supporting fixed structure 15 consists of a longitudinal inverted channel-shaped element provided with spaced transverse bulkheads (not shown). Fitting within this supporting structure is the bin 10 itself, of generally C-shaped cross section. The bin 10 is supported and guided by two sets of arms or linkages, 13 and 14. The upper arm 13 is pivoted at 16 on the fixed structure 15, while its outer end is pivoted to the end wall of the bin at 11. The lower arm 14 is of slightly greater length, and is pivoted on the fixed structure at 17 and to the bin at point 12. As illustrated, the fixed points 16 and 17 are vertically spaced on the aisle side or "front" of the structure, while the movable points 11 and 12 are closer to the centerline of the airplane, or the "back" of the bin. Thus the structure between points 17 and 16, the arm 13 between 16 and 11, the bin between 11 and 12, and the arm 14 between 12 and 17 in effect constitute a four-bar linkage, the links as shown being of unequal length.

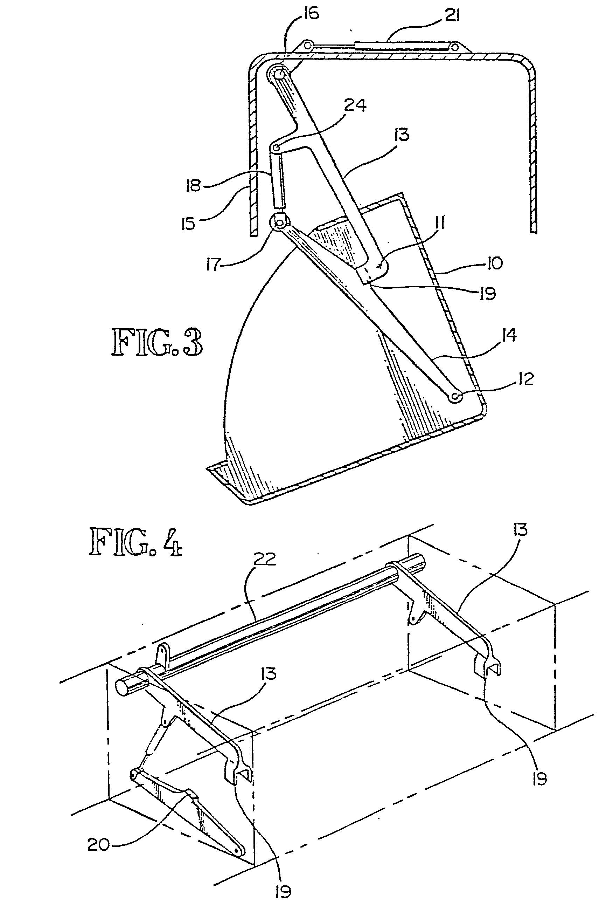

It will be understood by persons skilled in the mechanical arts that changing the lengths of these links will provide a variety of positions and attitudes for the bin as it travels outwardly from its retracted position. The lengths of these links and location of their pivot points may be chosen so that as the bin moves to its extended or down position, as shown in Figure 3, the bin moves principally downward, slightly forward (toward the aisle), and tilts slightly, so that its forward or aisle side is lower than the back. In the extended or down position, the bin thus is within easy reach but does not obstruct the aisle between the seats.

The mechanism exhibits several refinements enhancing the basic linkage thus far described. First, to counterbalance the weight of the bin and its contents a spring cartridge or biasing means, 18, which preferably is a gas spring (a piston-cylinder assembly containing gas under pressure), is installed between the fixed point 17 and a pivot 24 on a lateral extension of upper arm 13, thus resisting downward motion of the arm 13 and the bin 10. The spring cartridge 18 provides a counterclockwise moment about pivot point 16, as shown in Figure 2. As the bin is lowered the spring is compressed and its force increases, however, the effective moment arm of the force about point 16 decreases so that the counterbalancing moment is fairly constant until the bin is almost fully lowered. When the bin is almost fully lowered, the spring goes "overcenter", as shown in Figure 3. That is, point 24 is to the left (as shown) of a line joining points 16 and 17, with the result that the spring holds the bin in its down position. A snubbing device 21 is utilized to limit rapid motion in both directions, but particularly to limit the drop rate when the bin is heavily loaded. The snubbing device is preferably "dry", i.e., operates on frictional principles without use of a fluid.

The down position for the bin 10 is conveniently established by interengagement means comprising a boss or abutment 20 on the lower arm 14, and an inner surface of a fork-shaped abutment means 19 located on upper arm 13. In addition to limiting further downward travel of the bin, these interengagement means provide rigidity and stabilize the mechanism in the lateral direction (fore-and-aft with respect to the airplane). This is accomplished by the outwardly extending flanges of abutment means 19, which are best shown in Figure 4. The outwardly extending flanges may be appropriately radiused and lined with a low friction material for ease of seating upon and around the abutment 20 when the bin 10 is in its extended position. The insides of the outwardly extending flanges are then located in snug engagement with the sides of abutment 20 and the lower arm 14. This provides a rigidity and stability against movement of the bin 10 in the lateral direction when it is fully extended.

As best shown in Figure 4, the two upper arms 13, and the flange to which snubbing device 21 attaches, are each rigidly affixed to a torque tube 22. The torque tube 22 is preferably quite rigid under torsional loads, so as to force the two arms to work together. Moreover, it should be stiff enough to stabilize the entire mechanism against racking of the bin caused by uneven loading or operation, and to reduce, or eliminate, the need for the bin itself to be torsionally stiff, thereby reducing the structural weight of the bin. For example, the torque tube 22 may be constructed of a relatively lightweight material having a high modulus of elasticity, such as a graphite filament wound tube.

It should be apparent from the foregoing description that the mechanism of this invention provides a stowage bin system which is light in weight as well as being convenient and safe to use. The spring cartridge 18, the snubbing device 21, the lengths and pivot positions of the four-bar linkage, and the interengagement means, may be individually and collectively designed to achieve a wide variety of desired results. The bin should be provided with a positive latching device to retain it in its stowed position. Such a latching device (not shown) may be of a well-known type, such as a spring biased overcenter pawl with a guidance ramp. After the latch is released, the bin should move downwardly slowly and steadily even if it is very heavily loaded. When the load is removed from the bin, and it is moved upward slightly to cross through the overcenter position of the mechanism, the bin should slowly and steadily return to its stowed position under the moment created by the spring cartridge 18. In the preferred embodiment shown, the mechanism is entirely "dry", that is, neither the spring cartridge 18 nor the snubber device 21 utilize hydraulic fluids; thereby preventing any possibility of damage to bin contents caused by leakage of such fluids. The torque tube 22 is, of course, rotably mounted on the fixed supporting structure 15, preferably by low-friction bearings. Such bearings may also be used at each of the pivot points for the four-bar linkage mechanism.

## Claims

1. Overhead storage bin assembly comprising a supporting structure (15), means for carrying a bin (10) from said structure (15) movable between a stowed upper position (Fig. 2) and an open position (Fig. 3) in which the bin (10) is at least somewhat rotated with the opening thereof moved downwards characterized in that the carrying means comprises a first pair of arms (13) pivoted on said structure (15) and on said bin (10), a second pair of arms (14) vertically spaced from said first pair, pivoted on said structure (15) and said bin (10), said first pair of arms (13) and said second pair of arms (14) together with the bin (10) forming a four-bar linkage mechanism dimensioned in such a way that the bin (10) also moves downward in its movement from the stowed to the open position.

2. Assembly of claim 1, characterized in that said carrying means comprises interengagement means (19, 20) for limiting further downward travel of the bin (10) and for reacting lateral loads from the bin (10) thereby providing rigidity and stability in a lateral direction.

3. Assembly of claim 2, characterized in that said interengagement means comprises interengaging surfaces (19, 20) carried by said four-bar linkages (10, 13, 14).

4. Assembly of claim 3, characterized in that said four-bar linkage mechanism comprises two spaced apart arms (13, 14) each of which carry one of said interengaging surfaces (19, 20).

5. Assembly of claim 3, characterized in that one (14) of said arms comprises an abutment surface (20) and the other arm (13) comprises a fork-shaped abutment means (19), wherein said fork-shaped abutment means (19) includes an abutment surface and a pair of flanges outstanding therefrom, the inside surfaces of which are designed to fit in snug engagement with the sides of said abutment surfaces (20) on said one (14) of said arms.

6. Assembly according to one of the preceding claims, characterized in that at least one pair of arms (13) are joined by a torque resisting element.

7. Assembly according to one of the preceding claims, characterized by spring means (18) acting between the fixed structure (15) and said first arms (13) resisting motion thereof.

8. Assembly according to claim 7, characterized by snubbing means (21) acting between the fixed structure (15) and one of said pair of arms (13).

9. Assembly according to one of the preceding claims, characterized in that spring means (18) are attached to said first arm (13) at a point displaced from a line joining the pivots (16, 17) thereof whereby the torque exerted by the spring means (18) on said arms (13, 14) reverses direction in a limiting relative position of said arms (13, 14).

**Revendications**

1. Ensemble de coffre à bagages disposé en hauteur comprenant une structure de support (15), un moyen permettant de soutenir un coffre (10) à partir de ladite structure (15) de façon qu'il soit mobile entre une position supérieure escamotée (figure 2) et une position ouverte (figure 3) dans laquelle le coffre (10) a au moins un peu tourné de façon que son ouverture se soit déplacée vers le bas, caractérisé en ce que le moyen de support comprend une première paire de bras (13) articulée sur ladite structure (15) et sur ledit coffre (10), une deuxième paire de bras (14) verticalement séparée de ladite première paire et articulée sur ladite structure (15) et ledit coffre (10), ladite première paire de bras (13) et ladite deuxième paire de bras (14) formant avec le coffre (10) un mécanisme de tringleries à quatre barres qui est dimensionné de telle manière que le coffre (10) se déplace également vers le bas en allant de sa position escamotée à sa position ouverte.

2. Ensemble selon la revendication 1, caractérisé en ce que ledit moyen de support comprend des moyens (19, 20) de venue en prise mutuelle servant à limiter la poursuite du déplacement du coffre (10) vers le bas et à s'opposer à l'effet des charges latérales sur le coffre (10), de manière à assurer de la rigidité et de la stabilité dans la direction latérale.

3. Ensemble selon la revendication 2, caractérisé en ce que lesdits moyens de venue en prise mutuelle comprennent des surfaces (19, 20) venant mutuellement en prise qui sont portées par lesdites tringleries à quatre barres (10, 13, 14).

4. Ensemble selon la revendication 3, caractérisé en ce que ledit mécanisme de tringleries à quatre barres comprend deux bras (13, 14) séparés l'un de l'autre portant chacun l'une desdites surfaces (19, 20) venant mutuellement en prise.

5. Ensemble selon la revendication 3, caractérisé en ce que l'un (14) desdits bras comprend une surface de butée (20) et l'autre bras (13) comprend un moyen (19) de butée en forme d'étrier, où ledit moyen (19) de butée en forme d'étrier comporte une surface de butée et deux rebords faisant saillie de celle-ci, les surfaces internes des rebords étant destinées à se placer en ajustement serré sur les côtés de ladite surface de butée (20) dudit premier (14) desdits bras.

6. Ensemble selon l'une quelconque des revendications précédentes, caractérisé en ce qu'au moins une paire de bras (13) est réunie par un élément résistant aux torsions.

7. Ensemble selon l'une quelconque des revendications précédentes, caractérisé par un moyen à ressort (18) exerçant son action entre la structure fixe (15) et lesdits premiers bras (13) en résistant au déplacement de ceux-ci.

8. Ensemble selon la revendication 7, caractérisé par un moyen amortisseur (21) exerçant son action entre la structure fixe (15) et l'une desdites paires de bras (13).

9. Ensemble selon l'une quelconque des revendications précédentes, caractérisé en ce que le moyen à ressort (18) est fixé audit premier bras (13) en un point qui est écarté par rapport à la ligne réunissant les points d'articulation (16, 17) de celui-ci, si bien que le moment de force exercé par le moyen à ressort (18) sur lesdits bras (13, 14) change de sens en une position relative intermédiaire desdits bras (13, 14).

**Patentansprüche**

1. Hochliegende Verstaubehältnisanordnung, umfassend einen Tragaufbau (15), eine Einrichtung zum Halten eines Behältnisses (10) von dem Aufbau (15) her, das zwischen einer oberen Stauposition (Figur 2) und einer offenen Position (Figur 3), in welcher das Behältnis (10) wenigstens etwas gedreht ist, wobei seine Öffnung nach abwärts bewegt ist, bewegbar ist, dadurch gekennzeichnet, daß die Halteeinrichtung ein erstes Paar von Armen (13) umfaßt, die auf dem Aufbau (15) und auf dem Behältnis (10) drehbar gelagert sind, sowie ein zweites Paar von Armen (14), die vertikal im Abstand von dem ersten Paar angeordnet und auf dem Aufbau (15) und dem Behältnis (10) drehbar gelagert sind, wobei das erste Paar von Armen (13) und das zweite Paar von Armen (14) zusammen mit dem Behältnis (10) einen Vierstangen-Verbindungsgestängemechanismus bilden, der in einer solchen Weise bemessen ist, daß sich das Behältnis (10) bei seiner Bewegung von der Stauposition in die offene Position auch nach abwärts bewegt.

2. Anordnung nach Anspruch 1, dadurch gekennzeichnet, daß die Halteeinrichtung eine Zwischeneingriffseinrichtung (19, 20) zum Begrenzen einer weiteren Abwärtsbewegung des Behältnisses (10) und zum Ansprechen auf seitliche Belastungen von dem Behältnis (10) her, so daß dadurch die Steifigkeit und Stabilität in einer seitlichen Richtung erzielt wird, umfaßt.

3. Anordnung nach Anspruch 2, dadurch gekennzeichnet, daß die Zwischeneingriffseinrichtung Zwischeneingriffsoberflächen (19, 20) umfaßt, die von dem Vierstangen-Verbindungsgestänge (10, 13, 14) getragen werden.

4. Anordnung nach Anspruch 3, dadurch gekennzeichnet, daß der Vierstangen-Verbindungsgestängemechanismus zwei im Abstand voneinander befindliche Arme (13, 14) umfaßt, von denen jeder eine der Zwischeneingriffsoberflächen (19, 20) trägt.

5. Anordnung nach Anspruch 3, dadurch gekennzeichnet, daß einer (14) der Arme eine Anschlagoberfläche (20) umfaßt, während der andere Arm (13) eine gabelförmige Anschlageinrichtung (19) umfaßt, wobei die gabelförmige Anschlageinrichtung (19) eine Anschlagoberfläche und ein Paar von derselben herausstehende Flansche aufweist, deren innenseitige Oberflächen so ausgebildet sind, daß sie in Anschmiegeingriff mit den Seiten der Anschlagoberflächen (20) auf dem einen (14) der Arme passen.

6. Anordnung nach einem der vorhergehenden Ansprüche, dadurch gekennzeichnet, daß wenigstens ein Paar von Armen (13) durch ein drehmomentenwiderstehendes Element verbunden sind.

7. Anordnung nach einem der vorhergehenden Ansprüche, gekennzeichnet durch eine Federeinrichtung (18), die zwischen dem ortsfesten Aufbau (15) und den ersten Armen (13) wirkt und deren Bewegung Widerstand entgegensetzt.

8. Anordnung nach Anspruch 7, gekennzeichnet durch eine Stoßdämpfungseinrichtung (21), die zwischen dem ortsfesten Aufbau (15) und einem von dem Paar von Armen (13) wirkt.

9. Anordnung nach einem der vorhergehenden Ansprüche, dadurch gekennzeichnet, daß Federeinrichtungen (18) an dem ersten Arm (13) an einer Stelle angebracht sind, die gegenüber einer Linie versetzt ist, welche die Drehachsen (16, 17) der Arme verbindet, so daß dadurch das durch die Federeinrichtung auf die Arme (13, 14) ausgeübte Drehmoment seine Richtung in einer beschränkenden Relativposition der Arme (13, 14) umkehrt.

FIG. 1

FIG. 2

1

FIG. 3

FIG. 4